# EUROPEAN PATENT APPLICATION

(11) **EP 4 640 998 A1**
(43) Date of publication of application: **29.10.2025**
(21) Application number: 25171884.7
(22) Date of filing: 23.04.2025
(51) Int. Cl.: F01P 7/10, B60K 11/06, B60K 11/08, F01P 11/10, F02B 29/04, F01P 1/00

(54) **BI-DIRECTIONAL ACTIVE VENTILATION SYSTEM**

(30) Priority: 23.04.2024 US 202463637683 P
(71) Applicant: Volvo Truck Corporation, 405 08 Göteborg (SE)
(72) Inventor: NOVACEK, Justin, Oak Ridge, 27310 (US); SPENCER, Stacey, High Point, 27265 (US); BUIRSKY, Joseph, Perkiomenville, 18074 (US); PATE, Callaway, Washington, D.C., 20018 (US); CHINNAM, Vinay, State College, 16801 (US); DAVEY, Clayton, Sellersville, 18960 (US); GARIS, Benjamin, State College, 16801 (US)
(74) Representative: Zacco Sweden AB

(57) **Abstract**

A bidirectional active ventilation (BDAV) unit includes a housing that is mountable within a cover of an engine compartment of a vehicle, and a retractable intake scoop attached to the housing. The retractable intake scoop is movable between a first position that permits airflow into the engine compartment and a second position that permits airflow out of the engine compartment.

## Description

### TECHNICAL FIELD

The present disclosure relates to ventilation systems for vehicles. In particular, the present disclosure relates to apparatus for ventilation of engine compartments of vehicles.

### BACKGROUND

During operation of vehicles, and in particular during the operation of heavy vehicles such as trucks, commercial vehicles, construction equipment, etc., excess heat may accumulate within an engine compartment of the vehicle. Excess temperatures within the engine compartment is undesirable, as it can cause premature wear and/or failure of electronic and/or mechanical components within the engine compartment.

### SUMMARY

Some embodiments provide a bi-directional active ventilation (BDAV) system that can perform both "intake" and "exhaust" functions based on operating conditions of the vehicle. For example, in a first configuration (e.g., an intake configuration), the BDAV may act as an air intake to direct ambient air into the engine compartment of a vehicle, while in a second configuration (e.g., an exhaust configuration), the BDAV may act as an exhaust to allow hot air within the engine compartment to escape from the engine compartment into the ambient environment.

A bidirectional active ventilation (BDAV) unit according to some embodiments includes a housing that is mountable within a cover of an engine compartment of a vehicle, and a retractable intake scoop attached to the housing. The retractable intake scoop is movable between a first position that permits airflow into the engine compartment and a second position that permits airflow out of the engine compartment.

The BDAV unit may further include an electronically controlled actuator attached to the housing and to the retractable intake scoop. The electronically controlled actuator moves the retractable intake scoop between the first position and the second position in response to an electronic control signal.

The retractable intake scoop may include a front surface having a first plurality of louvers therein and an upper surface having a second plurality of louvers therein. When the retractable intake scoop is in the first position, the front surface of the retractable intake scoop is exposed to allow airflow through the first plurality of louvers into the engine compartment, and when the retractable intake scoop is in the second position, the front surface of the retractable intake scoop is retracted and the second plurality of louvers allows airflow out of the engine compartment.

The BDAV unit may further include a variable angle shutter within the housing. The variable angle shutter is movable between a first position and a second position corresponding to the first position of the retractable intake scoop and the second position of the retractable intake scoop, respectively. When the retractable intake scoop is in the first position, the variable angle shutter is positioned at a first angle to direct airflow from the first plurality of louvers in the front surface of the retractable intake scoop toward the engine compartment, and when the retractable intake scoop is in the second position, the variable angle shutter is positioned at a second angle to direct airflow out of the engine compartment through the second plurality of louvers in the upper surface of the retractable intake scoop.

The variable angle shutter may be rotatable about an axis of rotation between the first position and the second position thereof.

The BDAV unit may further include an electronically controlled actuator attached to the housing, and a linkage connecting the electronically controlled actuator to the variable angle shutter. The electronically controlled actuator causes the linkage to move the variable angle shutter between the first position and the second position in response to an electronic control signal.

The first position may correspond to an intake configuration of the BDAV unit and the second position may correspond to an exhaust configuration of the BDAV unit.

The second plurality of louvers may be angled away from a direction of travel of the vehicle to encourage airflow out of the engine compartment during forward movement of the vehicle.

The retractable intake scoop may be attached to the housing by a hinge that permits the retractable intake scoop to rotate between the first position and the second position thereof.

The BDAV unit of may further include a plurality of variable angle shutters within the housing. The plurality of variable angle shutters are movable between a first position and a second position corresponding to the first position of the retractable intake scoop and the second position of the retractable intake scoop, respectively. When the retractable intake scoop is in the first position, the plurality of variable angle shutters are positioned at a first angle to direct airflow from the first plurality of louvers in the front surface of the retractable intake scoop toward the engine compartment, and when the retractable intake scoop is in the second position, the plurality of variable angle shutters are positioned at a second angle to direct airflow out of the engine compartment through the second plurality of louvers in the upper surface of the retractable intake scoop.

The BDAV unit may further include an electronic control unit coupled to the electronically controlled actuator, and a sensor coupled to the electronic control unit. The sensor provides a sensor signal to the electronic control unit, and the electronic control unit generates the electronic control signal in response to the sensor signal.

The sensor may include a temperature sensor and/or a speedometer, and the electronic control unit controls the electronically controlled actuator to move the retractable intake scoop between the first position and the second position based on the sensor signal.

The electronic control unit may control movement of the retractable intake scoop between the first position and the second position based on a vehicle speed and a temperature of the engine compartment.

A vehicle according to some embodiments includes an engine compartment, a hood over the engine compartment, and a BDAV unit as described above mounted in the hood, wherein the BDAV unit is in fluid communication with the engine compartment.

A ventilation unit according to some embodiments includes a housing that is mountable onto an engine compartment of a vehicle, and a retractable intake scoop attached to the housing, wherein the retractable intake scoop is movable between a first position and a second position.

The retractable intake scoop includes a front surface having a plurality of louvers therein. When the retractable intake scoop is in the first position, the front surface of the retractable intake scoop is exposed to allow airflow through the plurality of louvers into the engine compartment, and when the retractable intake scoop is in the second position, the front surface of the retractable intake scoop is retracted into the housing.

The plurality of louvers may include a first plurality of louvers, and the retractable intake scoop may further include an upper surface having a second plurality of louvers therein. When the retractable intake scoop is in the second position, the second plurality of louvers allows airflow out of the engine compartment.

The ventilation unit may further include a variable angle shutter within the housing. When the variable angle shutter is movable between a first position and a second position corresponding to the first position of the retractable intake scoop and the second position of the retractable intake scoop, respectively. When the retractable intake scoop is in the first position, the variable angle shutter is positioned at a first angle to direct airflow from the first plurality of louvers in the front surface of the retractable intake scoop toward the engine compartment, and when the retractable intake scoop is in the second position, the variable angle shutter is positioned at a second angle to direct airflow out of the engine compartment through the second plurality of louvers in the upper surface of the retractable intake scoop.

A ventilation unit according to further embodiments includes a housing that is mountable within a cover of an engine compartment of a vehicle, a retractable intake scoop attached to the housing, wherein the retractable intake scoop is movable between a first position that permits airflow into the engine compartment and a second position that permits airflow out of the engine compartment, and a variable angle shutter within the housing. The variable angle shutter is movable between a first position and a second position corresponding to the first position of the retractable intake scoop and the second position of the retractable intake scoop, respectively. When the retractable intake scoop is in the first position, the variable angle shutter is positioned at a first angle to direct airflow towards the engine compartment, and when the retractable intake scoop is in the second position, the variable angle shutter is positioned at a second angle to direct airflow out of the engine compartment.

The retractable intake scoop may include a front surface having a first plurality of louvers therein and an upper surface having a second plurality of louvers therein. When the retractable intake scoop is in the first position, the front surface of the retractable intake scoop is exposed to allow airflow through the first plurality of louvers into the engine compartment, and when the retractable intake scoop is in the second position, the front surface of the retractable intake scoop is retracted and the second plurality of louvers allows airflow out of the engine compartment.

The ventilation unit may further include an electronically controlled actuator attached to the housing and to the retractable intake scoop. The electronically controlled actuator moves the retractable intake scoop between the first position and the second position in response to an electronic control signal.

### BRIEF DESCRIPTION OF THE DRAWINGS

**FIG. 1** illustrates a heavy tractor-trailer rig having an air scoop on the hood.
**FIG. 2** illustrates a ventilation unit according to some embodiments.
**FIGS. 3A-3C** are respective isometric, side and front views of a ventilation unit in an air intake configuration according to some embodiments.
**FIGS. 4A-4C** are respective isometric, side and front views of a ventilation unit in an exhaust configuration according to some embodiments.
**FIG. 5** is a schematic diagram of a control system for a ventilation unit according to some embodiments.

### DETAILED DESCRIPTION OF EMBODIMENTS

Embodiments of the present inventive concepts now will be described more fully hereinafter with reference to the accompanying drawings, in which embodiments of the inventive concepts are shown. This inventive concepts may, however, be embodied in many different forms and should not be construed as limited to the embodiments set forth herein. Rather, these embodiments are provided so that this disclosure will be thorough and complete, and will fully convey the scope of the inventive concepts to those skilled in the art. Like numbers refer to like elements throughout.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the inventive concepts. As used herein, the term "and/or" includes any and all combinations of one or more of the associated listed items.

The terminology used herein is for the purpose of describing particular embodiments only and is not intended to be limiting of the inventive concepts. As used herein, the singular forms "a", "an" and "the" are intended to include the plural forms as well, unless the context clearly indicates otherwise. It will be further understood that the terms "comprises," "comprising," "includes" and/or "including" when used herein, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this inventive concepts belong. It will be further understood that terms used herein should be interpreted as having a meaning that is consistent with their meaning in the context of this specification and the relevant art and will not be interpreted in an idealized or overly formal sense unless expressly so defined herein.

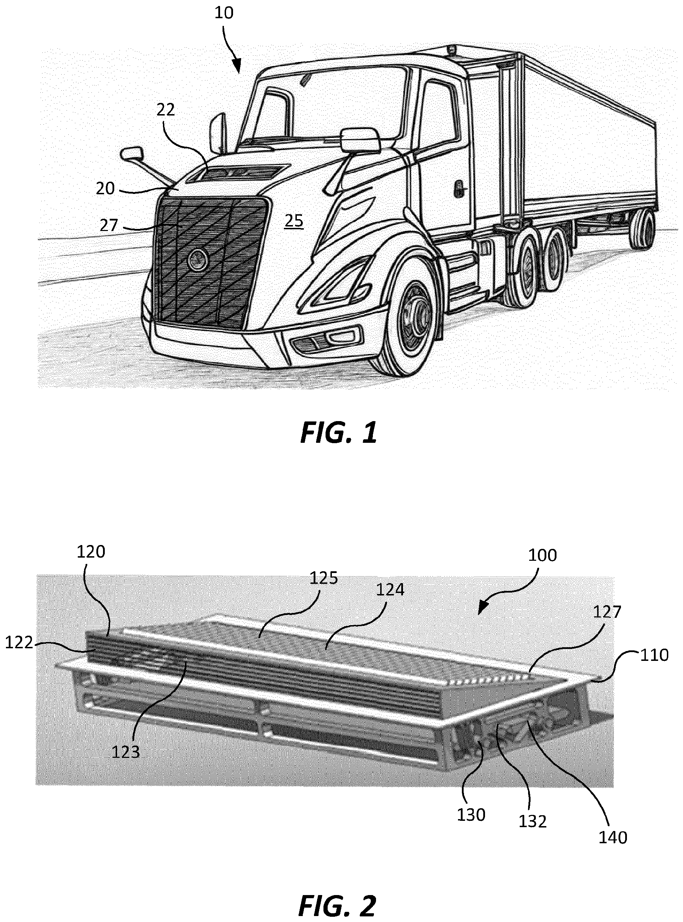

Some attempts have been made to provide extra ventilation to engine compartments of heavy vehicles. For example, **FIG. 1** illustrates a heavy tractor-trailer rig 10 having an engine compartment 25 covered by a hood 20 that allows operator and maintenance access to the engine compartment 25. The engine compartment includes a front radiator air intake 27 that directs ambient air to cool the radiator of the engine. Air passes through the radiator to cool the liquid coolant flowing through the engine, and from there the air flows into the engine compartment. However, air that passes across the radiator becomes heated before it can enter the engine compartment. To provide ambient air directly to the engine compartment, a hood scoop 22 is mounted in the hood 20. The hood scoop 22 acts as an air intake that directs ambient air directly into the engine compartment to provide additional cooling to the engine and other components in the engine compartment.

Some embodiments provide a bi-directional active ventilation (BDAV) unit that can perform both "intake" and "exhaust" functions based on current conditions of the vehicle. In a first (intake) configuration, the ventilation unit may act as an air intake to direct ambient air into the engine compartment of a vehicle, while in a second (exhaust) configuration, the ventilation unit may act as an exhaust to allow heated air within the engine compartment to escape from the engine compartment into the ambient environment. The ventilation unit may be switched between intake and exhaust configurations by repositioning various components of the ventilation unit, for example, in response to a control signal output by an electronic control unit.

The terms "BDAV unit", "BDAV system", "ventilation unit" and "ventilation system" are used herein interchangeably to refer to a ventilation system or unit according to the described embodiments.

The bi-directional airflow capability of a ventilation unit according to some embodiments differs from existing solutions that typically provide separate intake and exhaust systems. For example, the hood scoop 22 shown in **FIG. 1****,** may only act as an air intake.

To enable bi-directional airflow into and out of an engine compartment, some embodiments provide a ventilation unit including a retractable intake scoop and movable shutter vents within the ventilation unit. By having a retractable intake scoop, the ventilation unit has greater ability to intake air at various vehicular speeds, which may increase the overall effectiveness of the ventilation unit when it is in the intake configuration. When the ventilation unit is in the exhaust configuration, the air scoop may be retracted into the frame, or housing, of the ventilation unit, which may result in a significant reduction in airflow interruption when the ventilation unit is not in use or when it is in the exhaust configuration.

The use of a bi-directional ventilation system according to some embodiments has been shown using simulation to result in approximately a 15 C decrease in engine compartment temperatures compared to baseline simulations, along with a 5-10 C increase in windshield temperatures (using a simplified model, with 100 C initial engine compartment). Reducing the temperature of the engine compartment of a vehicle may result in reduced incidence of premature wear to electronic components within the engine compartment.

The configuration of the ventilation unit (i.e. whether the ventilation unit is in an intake configuration or an exhaust configuration) may be controlled by an electronic control unit of the vehicle based on one or more conditions of the vehicle, such as the temperature of the engine compartment, the ambient temperature, and/or the speed of the vehicle.

For example, in some embodiments, the ventilation system may be placed in the intake configuration when high engine compartment temperatures are detected. The ventilation unit may be placed in the exhaust configuration to allow for engine compartment temperatures to be used in a beneficial matter. For example, when ambient temperatures are low, the ventilation system may be placed into the exhaust configuration to allow heated air from the engine compartment to flow across the windshield of the vehicle to reduce or prevent windshield icing.

A ventilation unit according to some embodiments includes two active components, namely, one or more variable angle shutters and a retractable intake scoop, which are mounted within a primary assembly housing. The retractable intake scoop includes a top surface and a front surface. A first array of fixed louvers is provided on a top surface of the retractable intake scoop, and a second array of fixed louvers is provided in the front surface of the retractable intake scoop. As known in the art, louvers are a series of slatted or angled openings that are designed to allow and direct airflow therethrough while blocking or deflecting unwanted debris.

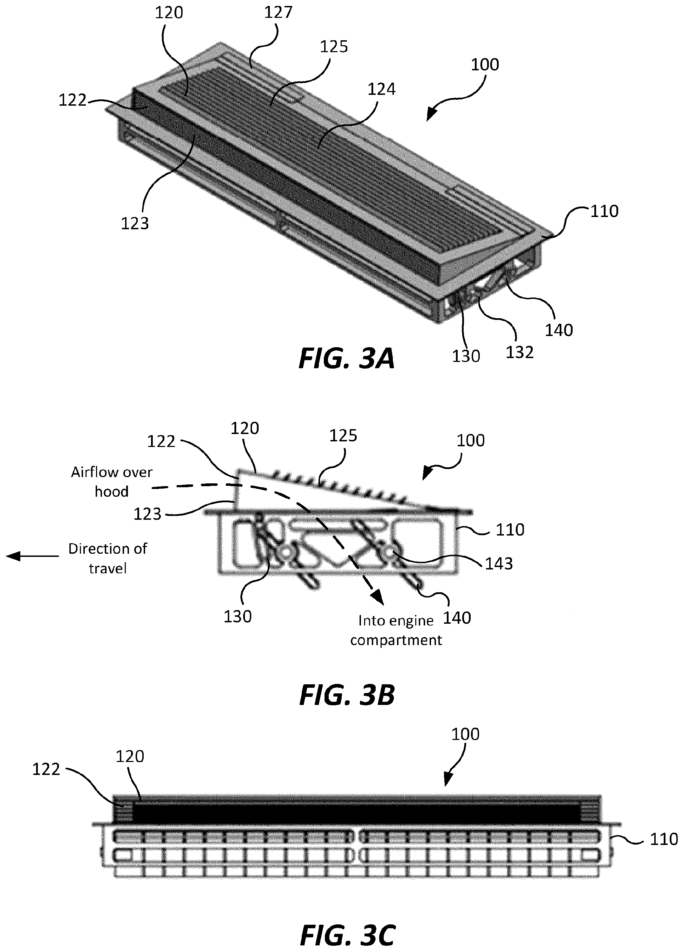

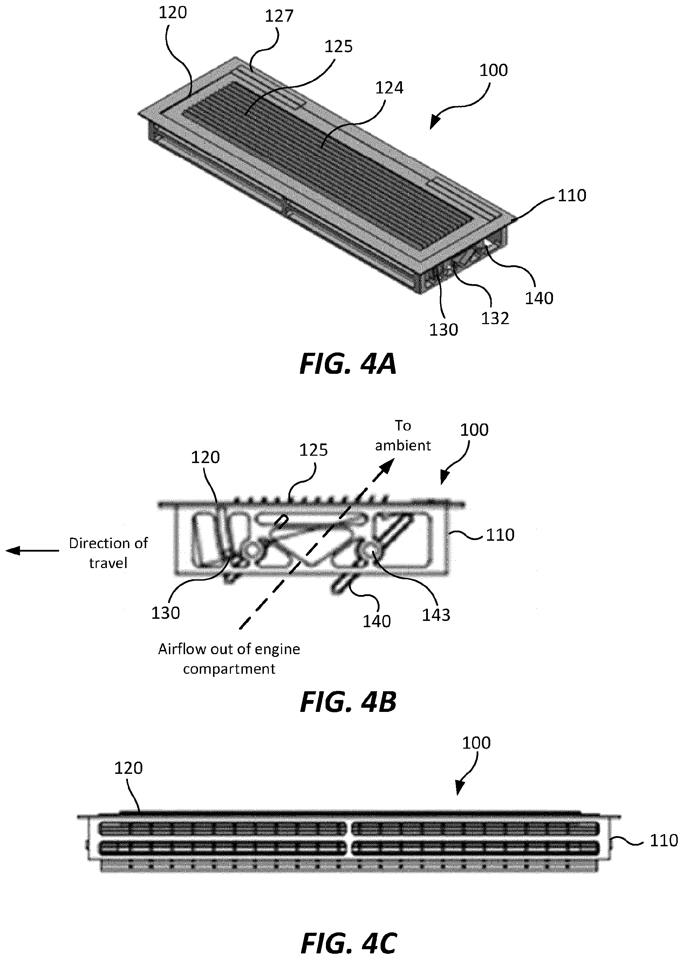

**FIG. 2** illustrates a ventilation unit 100 according to some embodiments. **FIGS. 3A-3C** are respective isometric, side and front views of a ventilation unit 100 in an air intake configuration according to some embodiments. **FIGS. 4A-4C** are respective isometric, side and front views of a ventilation unit 100 in an exhaust configuration according to some embodiments.

Referring to **FIGS. 2 to 4C****,** the ventilation unit 100 includes a housing 110 that is configured to be mounted in a hood or cover of a compartment to be ventilated, such as an engine compartment of a vehicle, such that the ventilation unit is in fluid communication with the compartment to allow air to pass into or out of the compartment through the ventilation unit. The ventilation unit includes a retractable intake scoop 120 that is attached to the housing 110 by means of one or more hinges 127 along a back side of the retractable intake scoop 120. The retractable intake scoop 120 is shown in the extended position in **FIG. 2** and **FIGS. 3A****-3C.** The retractable intake scoop 120 is shown in the retracted position in **FIGS. 4A-4C****.**

The retractable intake scoop 120 includes an upper surface 124 in which a first set of louvers 125 are formed to allow airflow out of the ventilation unit 100. The retractable intake scoop 120 also includes a front surface 122 in which a second series of louvers 123 are provided to allow airflow therethrough.

The first set of louvers 125 may be angled back away from the front surface 122 of the retractable intake scoop 120 (i.e., away from the direction of vehicular travel), so that exhaust air passing out of the ventilation unit 100 may be directed backwards towards the vehicle windshield.

The ventilation unit 100 further includes one or more variable angle shutters 140 within the housing 110.

The variable angle shutters 140 extend substantially along the width of the ventilation unit 100 and may be rotated about their respective axes from a first angular position to a second angular position.

Referring to **FIG. 3B****,** in the first angular position, corresponding to the air intake configuration, the variable angle shutters 140 are positioned to direct air flowing into the ventilation unit 100 through the front surface 122 of the retractable intake scoop 120 down through the housing 110 and into the engine compartment of the vehicle. Referring to FIG. 4B, in the second angular position, corresponding to the exhaust configuration, the variable angle shutters 140 are positioned to direct air from the engine compartment up through the first set of louvers 125 in the upper surface 124 of the retractable intake scoop 120.

The ventilation unit 100 further includes one or more actuators 130 within the housing 110 that are coupled to the retractable air intake 120 and that cause the retractable air intake 120 to move between the extended position (for the air intake configuration) and the retracted position (for the exhaust configuration). The actuator(s) 130 are also coupled to the variable angle shutters 140, for example by means of a linkage 132, that causes the variable angle shutters to move between a first angular orientation (for the air intake configuration shown in FIG. 3B) and a second angular orientation (for the exhaust configuration shown in **FIG. 4B**).

The retractable intake scoop 120 is extended when the ventilation unit 100 is in the air intake configuration and is retracted when the ventilation unit 100 is in the exhaust configuration. In the extended position, the front surface 122 of the retractable intake scoop 120 is open towards the direction of motion of the vehicle, allowing air to flow into the ventilation unit 100 through the second set of louvers 123 in the front surface 122 of the retractable intake scoop 120. In the retracted position, the front surface 122 of the retractable intake scoop 120 is retracted into the housing 110 of the ventilation unit 100, so that ambient air does not substantially flow through the second set of louvers 123.

Accordingly, referring to **FIG. 3B****,** when the ventilation unit 100 is in the air intake configuration (and the retractable intake scoop 120 is extended), air passes into the ventilation unit 100 through the second set of louvers 123 in the front surface 122 of the retractable intake scoop 120. The air passing into the ventilation unit 100 flows beneath the first set of louvers 125 in the upper surface 124 of the retractable intake scoop 120 and is directed into the engine compartment by the variable angle shutters 140, which are rotated to a first angular position.

Referring to **FIG. 4B****,** when the ventilation unit 100 is in the exhaust configuration and the retractable intake scoop 120 is retracted, the variable angle shutters 140 are rotated to a second angular position to redirect air from the engine compartment outwards through the first set of louvers 125. In the second angular position, the variable angle shutters 140 are positioned at an angle that is roughly the same as the orientation of the louvers 125 in the upper surface 124 of the retractable intake scoop 120 to permit efficient airflow out of the retractable intake scoop 120.

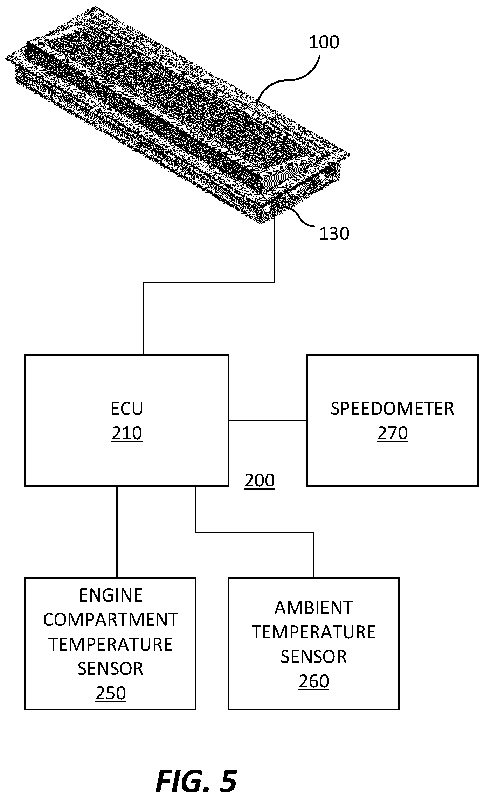

**FIG.** 5 is a schematic diagram of a control system 200 for a ventilation unit 100 according to some embodiments. In particular, the control system 200 includes an electronic control unit (ECU) 210 which may, for example, be a microcontroller. The ECU is coupled to the actuator(s) 130 of the ventilation unit 100, and supplies a control signal to the actuator(s) 130 to cause the ventilation unit to move between the air intake configuration (in which the retractable air intake 120 is in the extended position and the variable angle shutters are in the first angular position), and the exhaust configuration (in which the retractable air intake 120 is in the retracted position and the variable angle shutters are in the second angular position).

The control system 200 may further include one or more sensors that generate sensor data that can be used by the ECU 210 to determine whether the ventilation unit 100 should be in the air intake configuration or the exhaust configuration. For example, the control system may include a speedometer 270, an engine compartment temperature sensor 250 and/or an ambient temperature sensor 260 coupled to the ECU 200. As noted above, when the engine compartment temperature is sensed to be too high (e.g., higher than a threshold temperature), then the ECU 200 may determine that the ventilation unit should be placed in the air intake configuration, and generates and supplied a suitable control signal to the actuator(s) 130. Likewise, when the ambient air temperature is sensed to be below a predetermined threshold (which may be based on the speed of the vehicle), then the ECU 200 may determine that the ventilation unit should be placed in the exhaust configuration, and generates and supplied a suitable control signal to the actuator(s) 130.

Accordingly, referring to **FIGS. 1 to 5****,** a bidirectional active ventilation unit 100 according to some embodiments includes a housing 110 that is mountable within a cover of an engine compartment 25 of a vehicle 10, and a retractable intake scoop 120 attached to the housing 110. The retractable intake scoop 120 is movable between a first position that permits airflow into the engine compartment and a second position that permits airflow out of the engine compartment 25.

The ventilation unit 100 may further include an electronically controlled actuator(s) 130 attached to the housing 110 and to the retractable intake scoop 120. The electronically controlled actuator(s) 130 moves the retractable intake scoop 120 between the first position and the second position in response to an electronic control signal.

The retractable intake scoop 120 may include a front surface 122 having a first plurality of louvers 123 therein and an upper surface 124 having a second plurality of louvers 125 therein. When the retractable intake scoop 120 is in the first position, the front surface 122 of the retractable intake scoop 120 is exposed to allow airflow through the first plurality of louvers 123 into the engine compartment, and when the retractable intake scoop 120 is in the second position, the front surface 122 of the retractable intake scoop is retracted and the second plurality of louvers 125 allows airflow out of the engine compartment.

The ventilation unit 100 may further include a variable angle shutter 140 within the housing 110. The variable angle shutter 140 is movable between a first position and a second position corresponding to the first position of the retractable intake scoop 120 and the second position of the retractable intake scoop 120, respectively. When the retractable intake scoop 120 is in the first position, the variable angle shutter 140 is positioned at a first angle to direct airflow from the first plurality of louvers 123 in the front surface 122 of the retractable intake scoop 120 toward the engine compartment, and when the retractable intake scoop 120 is in the second position, the variable angle shutter 140 is positioned at a second angle to direct airflow out of the engine compartment through the second plurality of louvers 125 in the upper surface 124 of the retractable intake scoop 120.

The variable angle shutter 140 may be rotatable about an axis of rotation 143 between the first angular position and the second angular position thereof.

The ventilation unit 100 may further include an electronically controlled actuator(s) 130 attached to the housing, and a linkage 132 connecting the electronically controlled actuator(s) 130 to the variable angle shutter 140. The electronically controlled actuator(s) 130 causes the linkage 132 to move the variable angle shutter 140 between the first angular position and the second angular position in response to an electronic control signal.

The first angular position may correspond to an intake configuration of the ventilation unit 100 and the second angular position may correspond to an exhaust configuration of the ventilation unit 100.

The second plurality of louvers 125 may be angled away from a direction of travel of the vehicle to encourage airflow out of the engine compartment during forward movement of the vehicle.

The retractable intake scoop 120 may be attached to the housing 110 by a hinge 127 that permits the retractable intake scoop 120 to rotate between the first position and the second position thereof.

The ventilation unit 100 may further include a plurality of variable angle shutters 140 within the housing 110. The plurality of variable angle shutters 140 are movable between a first angular position and a second angular position corresponding to the first position of the retractable intake scoop 120 and the second position of the retractable intake scoop 120, respectively. When the retractable intake scoop 120 is in the first position, the plurality of variable angle shutters 140 are positioned at a first angle to direct airflow from the first plurality of louvers 123 in the front surface 122 of the retractable intake scoop 120 toward the engine compartment, and when the retractable intake scoop 120 is in the second position, the plurality of variable angle shutters 140 are positioned at a second angle to direct airflow out of the engine compartment through the second plurality of louvers 125 in the upper surface 124 of the retractable intake scoop 120.

The ventilation unit 100 may further include an electronic control unit 210 coupled to the electronically controlled actuator(s) 130, and a sensor 250, 260, 270 coupled to the electronic control unit 210 that provides a sensor signal to the electronic control unit 210, and the electronic control unit 210 generates the electronic control signal in response to the sensor signal.

The sensor may include a temperature sensor 250, 260 and/or a speedometer 270, and the electronic control unit 210 may control the electronically controlled actuator(s) 130 to move the retractable intake scoop 120 between the first position and the second position based on the sensor signal.

The electronic control unit 210 may control movement of the retractable intake scoop 120 between the first position and the second position based on a vehicle speed and a temperature of the engine compartment.

Referring to **FIGS. 1 to 5****,** a vehicle 10 according to some embodiments includes an engine compartment 25, a hood 20 over the engine compartment, and a ventilation unit 100 as described herein mounted in the hood 20. The ventilation unit 100 is in fluid communication with the engine compartment 25.

Referring to **FIGS. 1 to 5****,** a ventilation unit 100 according to further embodiments includes a housing 110 that is mountable onto an engine compartment 25 of a vehicle 10, and a retractable intake scoop 120 attached to the housing 110, wherein the retractable intake scoop 120 is movable between a first position and a second position.

The retractable intake scoop 120 includes a front surface 122 having a plurality of louvers 123 therein. When the retractable intake scoop 120 is in the first position, the front surface 122 of the retractable intake scoop 120 is exposed to allow airflow through the plurality of louvers 123 into the engine compartment 25, and when the retractable intake scoop 120 is in the second position, the front surface 122 of the retractable intake scoop 120 is retracted into the housing.

The retractable intake scoop 120 may further include an upper surface 124 having a second plurality of louvers 125 therein. When the retractable intake scoop 120 is in the second position, the second plurality of louvers 125 allows airflow out of the engine compartment.

The ventilation unit 100 may further include a variable angle shutter 140 within the housing 110. The variable angle shutter 140 is movable between a first position and a second position corresponding to the first position of the retractable intake scoop 120 and the second position of the retractable intake scoop 120, respectively. When the retractable intake scoop 120 is in the first position, the variable angle shutter 140 is positioned at a first angle to direct airflow from the first plurality of louvers 123 in the front surface of the retractable intake scoop 120 toward the engine compartment, and when the retractable intake scoop 120 is in the second position, the variable angle shutter 140 is positioned at a second angle to direct airflow out of the engine compartment through the second plurality of louvers 125 in the upper surface 124 of the retractable intake scoop 120.

Referring to **FIGS. 1 to 5****,** a ventilation unit 100 according to still further embodiments includes a housing 110 that is mountable within a cover of an engine 25 compartment of a vehicle 10, a retractable intake scoop 120 attached to the housing 110, wherein the retractable intake scoop 120 is movable between a first position that permits airflow into the engine compartment and a second position that permits airflow out of the engine compartment, and a variable angle shutter 140 within the housing 110. The variable angle shutter 140 is movable between a first position and a second position corresponding to the first position of the retractable intake scoop 120 and the second position of the retractable intake scoop 120, respectively. When the retractable intake scoop 120 is in the first position, the variable angle shutter 140 is positioned at a first angle to direct airflow towards the engine compartment, and when the retractable intake scoop 120 is in the second position, the variable angle shutter is positioned at a second angle to direct airflow out of the engine compartment.

Many different embodiments have been disclosed herein, in connection with the above description and the drawings. It will be understood that it would be unduly repetitious and obfuscating to literally describe and illustrate every combination and subcombination of these embodiments. Accordingly, all embodiments can be combined in any way and/or combination, and the present specification, including the drawings, shall be construed to constitute a complete written description of all combinations and subcombinations of the embodiments described herein, and of the manner and process of making and using them, and shall support claims to any such combination or subcombination.

In the drawings and specification, there have been disclosed typical embodiments and, although specific terms are employed, they are used in a generic and descriptive sense only and not for purposes of limitation, the scope of the invention being set forth in the following claims.

## Claims

1. A bidirectional active ventilation (BDAV) unit (100), comprising:
a housing (110) that is mountable within a cover of an engine compartment of a vehicle; and
a retractable intake scoop (120) attached to the housing, wherein the retractable intake scoop is movable between a first position that permits airflow into the engine compartment and a second position that permits airflow out of the engine compartment.

2. The BDAV unit of Claim 1, further comprising an electronically controlled actuator (130) attached to the housing and to the retractable intake scoop, wherein the electronically controlled actuator moves the retractable intake scoop between the first position and the second position in response to an electronic control signal.

3. The BDAV unit of Claim 1 or 2, wherein the retractable intake scoop (120) comprises a front surface (122) having a first plurality of louvers (123) therein and an upper surface (124) having a second plurality of louvers (125) therein, wherein when the retractable intake scoop is in the first position, the front surface of the retractable intake scoop is exposed to allow airflow through the first plurality of louvers into the engine compartment, and when the retractable intake scoop is in the second position, the front surface of the retractable intake scoop is retracted and the second plurality of louvers allows airflow out of the engine compartment.

4. The BDAV unit of Claim 3, further comprising:
a variable angle shutter (140) within the housing (110), wherein the variable angle shutter is movable between a first angular position and a second angular position corresponding to the first position of the retractable intake scoop and the second position of the retractable intake scoop, respectively;
wherein when the retractable intake scoop is in the first position, the variable angle shutter is positioned at a first angle to direct airflow from the first plurality of louvers in the front surface of the retractable intake scoop toward the engine compartment; and
wherein when the retractable intake scoop is in the second position, the variable angle shutter is positioned at a second angle to direct airflow out of the engine compartment through the second plurality of louvers in the upper surface of the retractable intake scoop.

5. The BDAV unit of Claim 4, wherein the variable angle shutter is rotatable about an axis of rotation (143) between the first angular position and the second angular position thereof.

6. The BDAV unit of Claim 4 or 5, further comprising:
an electronically controlled actuator (130) attached to the housing (110); and
a linkage (132) connecting the electronically controlled actuator to the variable angle shutter (140), wherein the electronically controlled actuator causes the linkage to move the variable angle shutter between the first position and the second position in response to an electronic control signal.

7. The BDAV unit of any previous Claim, wherein the first position corresponds to an intake configuration of the BDAV unit and the second position corresponds to an exhaust configuration of the BDAV unit.

8. The BDAV unit of any of Claims 3 to 7, wherein the second plurality of louvers (125) are angled away from a direction of travel of the vehicle to encourage airflow out of the engine compartment during forward movement of the vehicle.

9. The BDAV unit of any previous Claim, wherein the retractable intake scoop (120) is attached to the housing (110) by a hinge (127) that permits the retractable intake scoop to rotate between the first position and the second position thereof.

10. The BDAV unit of any of Claims 3 to 9, further comprising:
a plurality of variable angle shutters (140) within the housing (110), wherein the plurality of variable angle shutters are movable between a first angular position and a second angular position corresponding to the first position of the retractable intake scoop (120) and the second position of the retractable intake scoop, respectively;
wherein when the retractable intake scoop is in the first position, the plurality of variable angle shutters are positioned at a first angle to direct airflow from the first plurality of louvers in the front surface of the retractable intake scoop toward the engine compartment; and
wherein when the retractable intake scoop is in the second position, the plurality of variable angle shutters are positioned at a second angle to direct airflow out of the engine compartment through the second plurality of louvers in the upper surface of the retractable intake scoop.

11. The BDAV unit of any of Claims 2 to 10, further comprising:
an electronic control unit (210) coupled to the electronically controlled actuator; and
a sensor (250, 260, 270) coupled to the electronic control unit, wherein the sensor provides a sensor signal to the electronic control unit, and wherein the electronic control unit generates the electronic control signal in response to the sensor signal.

12. The BDAV unit of Claim 11, wherein the sensor comprises a temperature sensor (250, 260) and/or a speedometer (270), and wherein the electronic control unit controls the electronically controlled actuator to move the retractable intake scoop between the first position and the second position based on the sensor signal.

13. The BDAV unit of Claim 12, wherein the electronic control unit controls movement of the retractable intake scoop between the first position and the second position based on a vehicle speed and a temperature of the engine compartment.

14. A vehicle (10), comprising:
an engine compartment (25);
a hood (20) over the engine compartment; and
a BDAV unit (100) according to any of Claims 1 to 13 mounted in the hood, wherein the BDAV unit is in fluid communication with the engine compartment.
